# EUROPEAN PATENT SPECIFICATION

(11) **EP 0 862 112 B1**
(45) Date of publication and mention of the grant of the patent: **21.09.2005**
(21) Application number: 98102737.8
(22) Date of filing: 17.02.1998
(51) Int. Cl.: G06F 9/38

(54) **Data processing system having an instruction pipeline**
Datenverarbeitungssystem mit Befehlspipeline
Système de traitement de données avec pipeline d'instructions

(30) Priority: 27.02.1997 JP 4406497; 22.10.1997 JP 28999497
(43) Date of publication of application: 02.09.1998
(73) Proprietor: DENSO CORPORATION, Aichi-pref., 448-0029 (JP)
(72) Inventor: Hayakawa, Hiroshi, Kariya-City, Aichi-Pref. 448-0029 (JP); Fukumoto, Harutsugu, Kariya-City, Aichi-Pref. 448-0029 (JP); Tanaka, Hiroaki, Kariya-City, Aichi-Pref. 448-0029 (JP); Ishihara, Hideaki, Kariya-City, Aichi-Pref. 448-0029 (JP)
(74) Representative: Winter, Brandl,&Fürniss, Hübner Röss, Kaiser, Polte Partnerschaft Patent- und Rechtsanwaltskanzlei

(56) References cited:
- US-A- 4 079 455
- MCGEADY S: "THE I960CA SUPER SCALAR IMPLEMENTATION OF THE 80960 ARCHITECTURE" , WESCON TECHNICAL PAPERS,US,WESTERN PERIODICALS CO. NORTH HOLLYWOOD, VOL. 33, PAGE(S) 628-637 XP000116074 * abstract * * page 633, column 1, line 16 - page 634, column 1, line 12 * * figures 7-9 *
- MELEAR C: "THE DESIGN OF THE 88000 RISC FAMILY" IEEE MICRO,US,IEEE INC. NEW YORK, vol. 9, no. 2, 1 April 1989 (1989-04-01), pages 26-38, XP000124913 ISSN: 0272-1732
- TREMBLAY M ET AL: "THE DESIGN OF THE MICROARCHITECTURE OF ULTRASPARCTM-I" PROCEEDINGS OF THE IEEE,US,IEEE. NEW YORK, vol. 83, no. 12, 1 December 1995 (1995-12-01), pages 1653-1662, XP000550380 ISSN: 0018-9219

## Description

The present invention relates generally to a data processing system having an instruction pipeline, and more particularly a data processing system enabling high-speed pipelined operations.

Data processing systems are known in the art which performs a pipelined operation in which a plurality of instructions are executed in a plurality of parallel steps concurrently and in an overlapped fashion.

As one example of such data processing systems, a typical CPU designed to perform a five-stage pipelined operation will be discussed below.

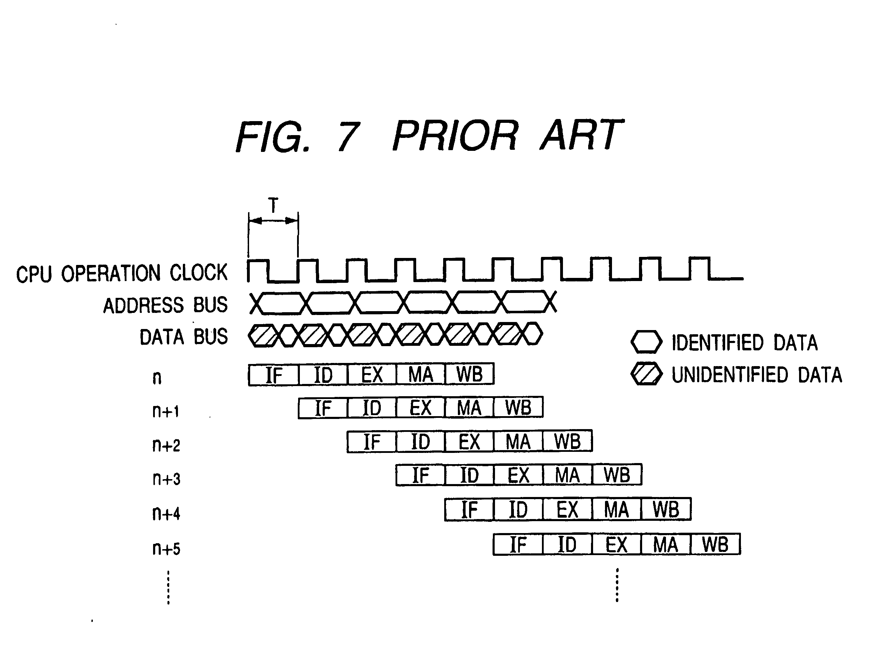

The CPU divides the process of executing each instruction into five stages: IF (instruction fetch), ID (instruction decode), EX (execution), MA (memory access), and WB (write back) and performs a plurality of instructions in a parallel fashion, as shown in Fig. 7.

The IF stage is a fetch operation which reads an instruction out of a given program stored in a memory such as a ROM or a RAM. In the ID stage, a decode operation is carried out to decode the instruction to provide data on an operation to be carried out as well as identifying an address of the operation. In the EX stage, an execution operation is carried out to read the operation out of a register in the CPU based on the address specified in the ID stage and perform the operation. In the MA stage, a result of the operation at the EX stage is used as an address in a memory access to the ROM or RAM. In the WB stage, data including the result of execution of the operation in the EX stage is written into a register or memory.

In the pipelined operation, as shown in Fig. 7, during the ID stage in the nth instruction processing cycle in which the nth instruction read out of a memory in the IF stage is decoded, the (n+1)th instruction is read out of the memory in the IF stage of the (n+1)th instruction processing cycle. During the EX stage of the nth instruction processing cycle, the (n+1)th instruction is decoded in the ID stage of the (n+1) instruction processing cycle, and the (n+2)th instruction is read out of the memory in the IF stage of the (n+2)th instruction processing cycle. In this manner, different operations on successive instructions are performed simultaneously, thereby speeding up the processing of the instructions.

The operations of all the stages are effected in synchronism with system clocks of the CPU (also referred to as CPU operation clocks, hereinafter). The operation of one of the stages is completed in a period of time T required for one cycle of the system clocks.

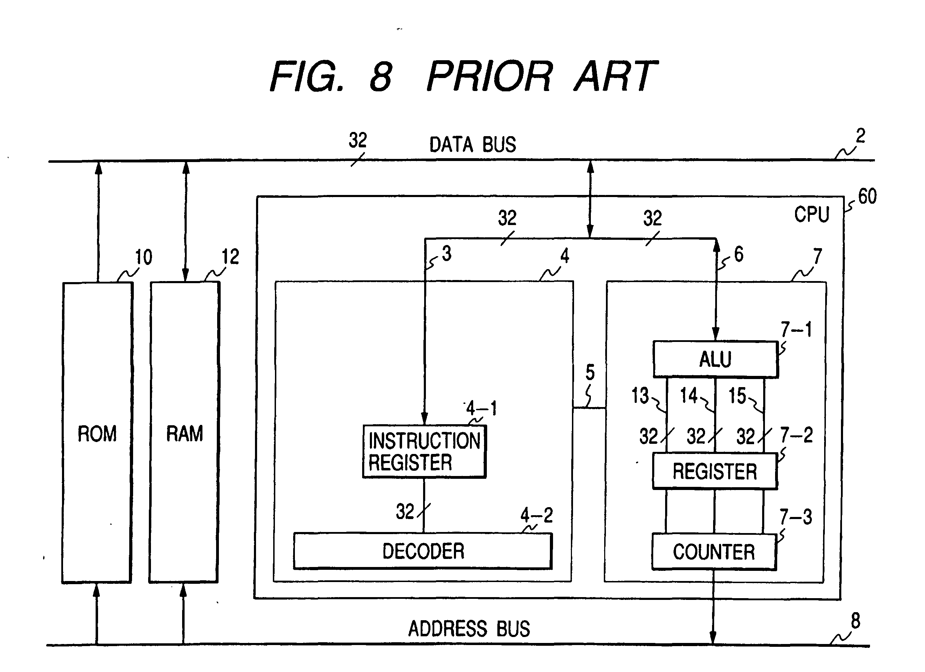

Fig. 8 shows a conventional CPU designed to execute the above described pipelined operation.

The shown CPU includes a decoder 4 and a data path circuit 7. The decoder 4 decodes instructions of a program fetched from, for example, a ROM 10, through a data bus 2 and an input bus 3. The data path circuit 7 is connected to the data bus 2 through an input/output data bus 6 and controlled through a control bus 5 leading to the decoder 4.

The data path circuit 7 includes an arithmetic and logic unit (ALU) 7-1, a register unit 7-2, and a program counter unit 7-3 all of which are connected to each other through three buses 13, 14, and 15 for data communication. The ALU 7-1 performs logical and arithmetic operations at the EX stage. The register unit 7-2 temporarily stores results of the operations of the ALU 7. The program counter unit 7-3 counts and holds an address to be outputted at the IF stage to an address bus 8 connected to address lines of the ROM 10 and the RAM 12.

The decoder 4 includes an instruction register 4-1 and a decoder unit 4-2. The instruction register 4-1 receives through the input bus 3 an instruction outputted in the IF stage from the ROM 10 to the data bus 2 and stores it. The decoder unit 4-2 decodes the instruction stored in the instruction register 4-1 in the ID stage.

The decoder 4 and the data path circuit 7 are activated in synchronism with system clocks (not shown). The decoder 4 decodes through the decoder unit 4-2 in the ID stage the instruction fetched in the IF stage from the ROM 10 into the instruction register 4-1 and operates the units 7-1, 7-2, and 7-3 of the data path circuit 7 based on the decoded instruction to control each stage of the pipelined operation.

In the above CPU, the execution time in the IF stage must be set longer than a response rate of a memory in which a program is stored. Specifically, the execution time T in the IF stage, as shown in Fig. 7, required for fetching an instruction from the memory must be longer than the time required for data on the data bus 2 to be identified after an address on the address bus 8 is changed.

The execution time in each stage of the pipelined operation is determined to be equal to the longest one in all the stages. Conventional data processing systems having a pipeline, therefore, have the drawback in that it is difficult to increase the speed of data processing (i.e., an operation execution speed in the EX stage) above a response rate of a memory storing therein a program.

In order to avoid the above problem, it may be proposed to use a high-speed cache memory to decrease the access time required to gain access to the ROM. The use of such cache memory, however, encounters a problem that the overall size of the system is increased.

From each of McGeady, S.: "THE 1960CA SUPER SCALAR IMPLEMENTATION OF THE 80960 ARCHITECTURE", Wescon Technical Papers, US, Western Peridicals Co. North Hollywood, vol. 33, pages 628 to 637, XP000116074; Melear, C.: "THE DESIGN OF THE 88000 RISC FAMILY", IEEE Micro US, IEEE Inc. New York, vol. 9, no. 2, April 1, 1989 (1989-04-01), pages 26 to 38, XP000124913, ISSN: 0272-1732; Tremblay, M. et al.: "THE DESIGN OF THE MICROARCHITECTURE OF ULTRASPARCTM-I", Proceedings of the IEEE, US, IEEE New York, vol. 83, no. 12, December 1, 1995 (1995-12-01), pages 1653 to 1662, XP000550380, ISSN: 0018-9219; and US-A-4 079 455 there is known that CPUs used in a pipeline take much more time to fetch instructions from a memory (ROM) than those required for instruction decoding, arithmetic operation, and register write back. In a typical prior art pipeline, one instruction is performed in each execution cycle. Therefore, execution times of all stages, i.e., ID (instruction decode), EX (execution), MA (memory access), and WB (write back) stages, other than an IF (instruction fetch) stage must be identical with the longest execution time of the IF stage. Specifically, the operating times of the ID, EX, MA, and WB stages need to be prolonged more than required, thus encountering a difficulty in increasing an operating frequency of a CPU. A typical solution for this problem is to store instructions, which are stored in a ROM and used frequently, in a RAM (i.e., a cache memory) whose readout time is short, thereby decreasing the execution time of the instruction fetching stage for speeding up an operation of the CPU.

Such a system, however, uses the cache memory, thus resulting in an increase in size of a chip. Due to a penalty for a cache error (a required instruction is not stored in the cache memory, and a low-speed memory is accessed, so that an operation of the CPU is stopped), it becomes impossible to ensure a real-time control of a system built-in device.

It is therefore the object of the present invention to avoid the disadvantages of the prior art and, in more detail, to provide a data processing system and a pipelining system which are capable of performing pipelined operations at higher speeds regardless of a response rate of a program-stored memory and without use of a cache memory.

As to the data processing system this object is solved by the features indicated in claim 1 and as to the pipelining method this object is solved by the features indicated in claim 6.

Further advantageous modifications of the present invention are subject matter of the dependent claims.

The present invention will be understood more fully from the detailed description given hereinbelow and from the accompanying drawings of the preferred embodiment of the invention, which, however, should not be taken to limit the invention to the specific embodiment but are for explanation and understanding only.

In the drawings:
Fig. 1 is a block diagram which shows a circuit structure of a data processing system according to the first embodiment of the invention;
Fig. 2 is a time chart which shows the flow of a pipelined operation executed in the data processing system in Fig. 1;
Fig. 3 is an illustration which shows a memory structure of a ROM used in the data processing system in Fig. 1;
Fig. 4 is a time chart which shows the flow of a pipelined operation executed in a data processing system according to the second embodiment of the invention;
Fig. 5 is an illustration which shows a memory structure of a ROM used in a data processing system of the second embodiment;
Fig. 6 is a block diagram which shows a circuit structure of a decoder used in a data processing system according to the third embodiment of the invention;
Fig. 7 is a time chart which shows the flow of a pipelined operation executed in a conventional data processing system; and
Fig. 8 is a block diagram which shows a circuit structure of a conventional data processing system.

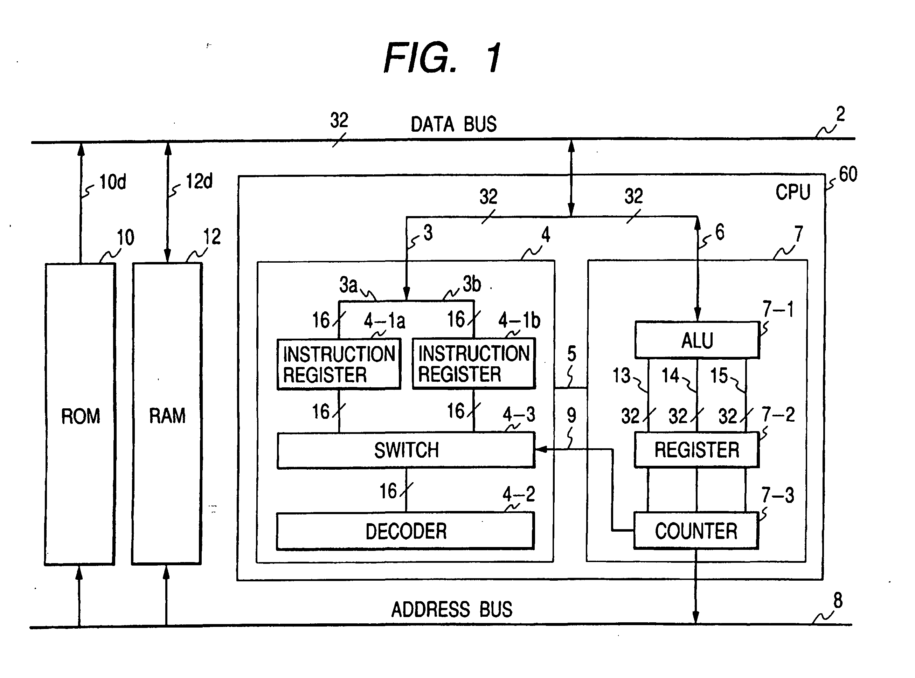

Referring now to the drawings, particularly to Fig. 1, there is shown a data processing system having a pipeline according to the first embodiment of the invention.

The data processing system generally includes a CPU 60, a ROM 10, and a RAM 12.

The CPU 60 includes a decoder 4 and a data path circuit 7. The decoder 4 consists of instruction registers 4-1a and 4-1b, a switching unit 4-3, and a decoder unit 4-2. The data path circuit 7 consists of an arithmetic logic unit 7-1, a register unit 7-2, and a program counter unit 7-3.

The ROM 10 and RAM 12 connect with the CPU 60 through data lines 10d and 12d and a data bus 2. The data lines 10d and 12d and the data bus 2 each have a bus width of 32 bits, while a basic bit length of each of instructions of a program stored in the ROM 10 is set to 16 bits. The CPU 60 is designed to read two instructions simultaneously out of the ROM 10 in a single read access operation.

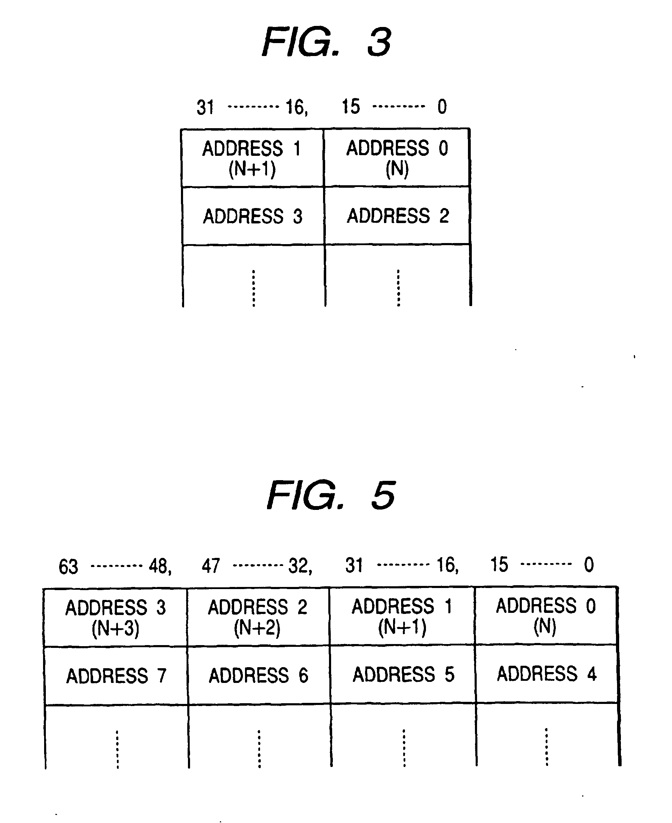

The ROM 10 has a so-called little endian memory structure, as shown in Fig. 3, wherein each address is assigned to 16-bit data. When the CPU 60 outputs an address N (= an even number) to an address bus 8, the ROM 10 outputs 32-bit data that is a combination of 16-bit data stored at the address N and 16-bit data stored at the address (N + 1) to the data bus 2.

The CPU 60 also has, as shown in Fig. 1, an input bus 3 leading to the decoder 4. The input bus 3 connects with two branches: a 16 higher order bit path 3a and a 16 lower order bit path 3b which are connected to the instruction registers 4-1a and 4-1b, respectively. The instruction register 4-1b stores therein an instruction transferred from the ROM to 16 lower order bit positions of the data bus 2, while the instruction register 4-1a stores therein an instruction transferred to 16 higher order bit positions of the data bus 2 that is to be executed following the instruction stored in the instruction register 4-1b.

The instructions stored in the instruction registers 4-1a and 4-1b are supplied to the switching unit 4-3. The switching unit 4-3 is responsive to a switching signal inputted from the program counter unit 7-3 through a control line 9 to provide either of the instructions supplied from the instruction registers 4-1a and 4-1b to the decoder unit 4-2 for decoding it.

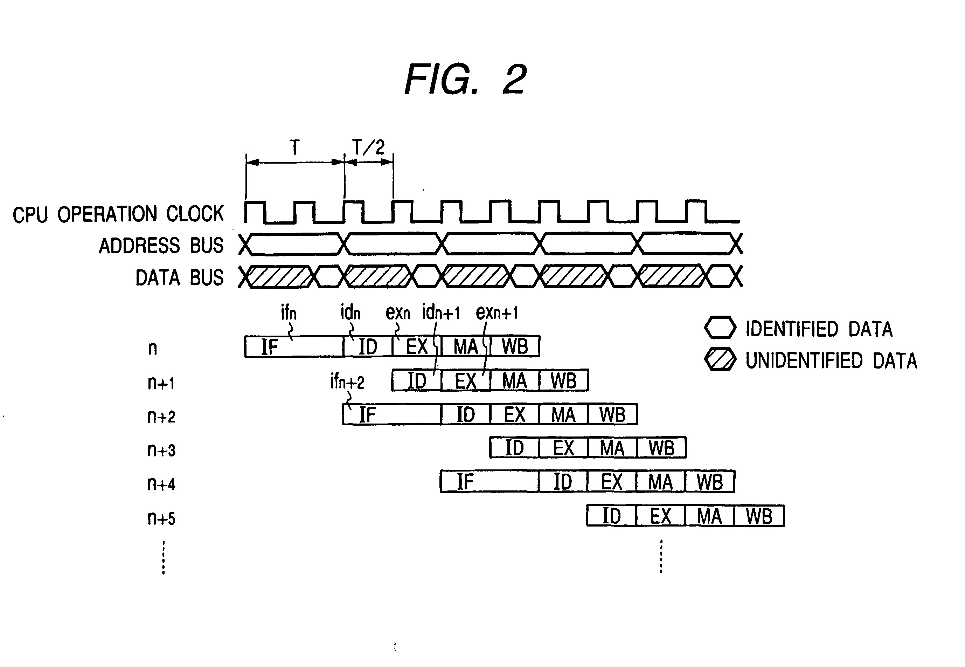

In the CPU 60, the execution time of each of the ID stage, the EX stage, the MA stage, and the WB stage, as shown in Fig. 2, corresponds to one cycle of system clocks, while the execution time T of the IF stage corresponds to two cycles of the system clocks and is substantially identical with that in the conventional CPU shown in Figs. 7 and 8. Specifically, the execution time T in the IF stage is, as discussed above, determined based on a response rate of the ROM 10 and identical with that in the conventional CPU, while the execution time in the other stages is half the execution time T in the IF stage. In other words, the frequency of the operation clocks of the CPU 60 is twice that in the conventional CPU.

In the CPU 60, each time one of the system clocks (i.e., the operation clocks) rises, an address held in the program counter unit 7-3 is incremented by one (1). Each time the address in the program counter unit 7-3 reaches an even number, it is outputted to the address bus 8.

The ROM 10 is responsive to the address transferred through the address bus 8 to output two instructions expressed in 32 bits in total to the data bus 2. When data in the data bus 2 is, as shown in Fig. 2, considered to have been identified completely (i.e., at the second fall of the system clocks after the address is outputted to the address bus 8), the instruction outputted from the ROM 10 to the 16 lower order bit positions of the data bus 2 that is to be executed first is stored in the instruction register 4-1b, while the instruction outputted to the 16 higher order bit positions of the data bus 2 that is to be executed next is stored in the instruction register 4-1a. In this manner, the operation in the IF stage is achieved by activities of two system clocks.

In the ID stage, the switching unit 403 provides the instruction stored in the instruction register 4-1b to the decoder unit 403 when an address held in the program counter unit 7-3 reaches an even number and the instruction stored in the instruction register 401a to the decoder unit 4-2 when an address held in the program counter unit 7-3 reaches an odd number.

In the EX stage, when the system clock rises, the arithmetic logic unit 7-1 performs an operation on data read out of the register unit 7-2 according to the instruction decoded by the decoder unit 4-2 at the rise of the preceding system clock. The operations in the MA and WB stages are effected in the units 7-1, 7-2, and 7-3 according to a result of the operation in the EX stage in conventional manners.

Specifically, in the pipeline operation executed by the CPU 60, nth and (n+1)th instructions are, as shown in Fig. 2, simultaneously fetched from the ROM 10 in the IF stage ifn in the nth instruction processing cycle. The nth instruction is decoded in the ID stage idn. The operation that is specified by the nth instruction decoded in the ID stage idn is executed at the EX stage exn. During execution of the operation in the EX stage exn in the nth instruction processing cycle, the (n+1)th instruction is decoded in the ID stage idn+1 in the (n+1)th instruction processing cycle. The operation that is specified by the (n+1)th instruction decoded by the ID stage idn+1 is executed in the EX stage exn+1. Over the ID stage idn in the nth instruction processing cycle and the ID stage idn+1 in the (n+1)th instruction processing cycle, the (n+2)th and (n+3)th instructions are fetched simultaneously from the ROM 10 in the IF stage ifn+2 in the (n+2) instruction processing cycle. These operations are performed repeatedly in following instruction processing cycles.

The CPU 60 of this embodiment, as apparent from the above discussion, sets the basic bit length of each of instructions fetched simultaneously from the ROM 10 to half the bus width of the data line 10d of the ROM 10 and also sets the execution time T in the IF stage to twice that in the other stages. Two instructions are fetched simultaneously from the ROM 10 in a single access operation in the IF stage and then decoded and executed in sequential instruction processing cycles, respectively. The operation in the IF stage is carried out every two instruction processing cycles for a period of time during which the two ID stages in the successive instruction processing cycles are effected. This allows the execution time T in the IF stage to be identical with that in the conventional CPU with the result that the execution time in the other stages is half that in the conventional CPU. Thus, the CPU 60 of this embodiment increases the speed of execution of an instruction above a response rate of the ROM 10, that is, shortens a time interval between the two sequential EX stages.

In the above first embodiment, the basic bit length of an instruction is 16 bits, and the bus width of the data bus 2 is 32 bits, however, they may alternatively be 32 bits and 64 buts. Additionally, the CPU 60 fetches two instructions simultaneously from the ROM 10 in the IF stage, however, it may alternatively fetch more than two instructions simultaneously from the ROM 10.

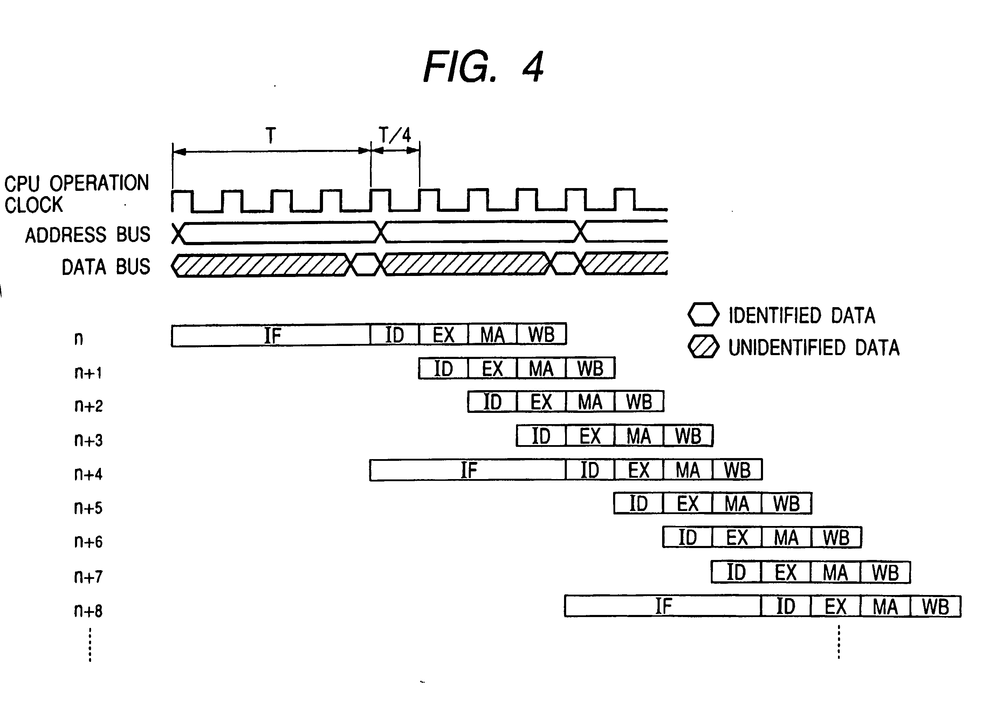

The data processing system of the second embodiment will be described below with reference to Fig. 4 which is designed to fetch four instructions simultaneously from the ROM 10.

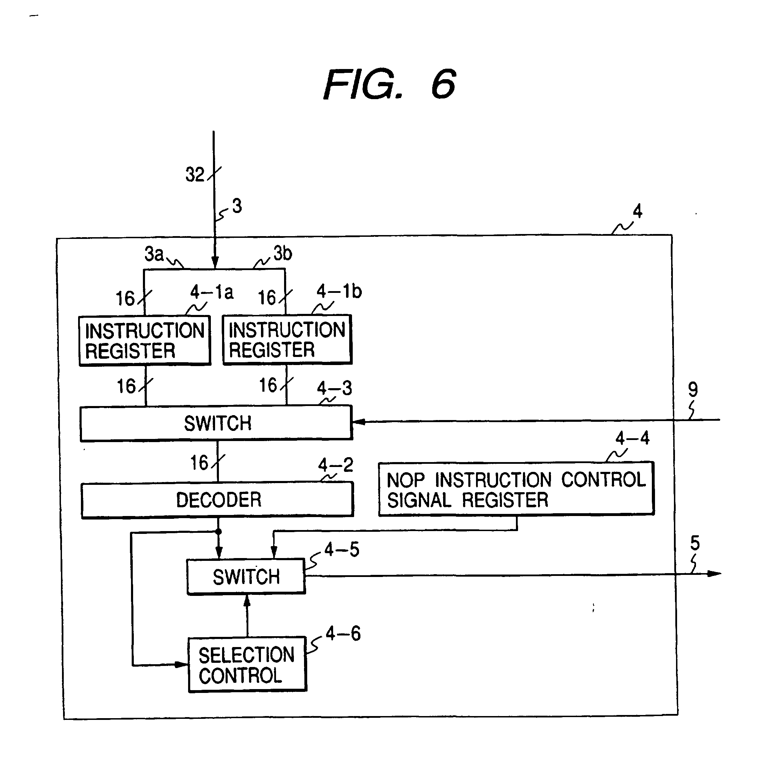

The CPU 60 of the second embodiment is different from that in the first embodiment in the following five points. Other arrangements are identical, and explanation in detail will be omitted there.
(1) The basic bit length of each of instructions fetched simultaneously from the ROM 10 is 16 bits identical with that in the first embodiment, but the bus width of the data lines 10d and 12d of the ROM 10 and RAM 12 and the data bus 2 connecting with the data lines 10d and 12d is 64 bits for allowing four instructions to be fetched simultaneously from the ROM 10 in a single access operation.
   The ROM 10 has a so-called little endian memory structure, as shown in Fig. 5, wherein each address is, similar to the first embodiment, assigned to 16-bit data. When the CPU 60 outputs an address N (= an integer divisible by four) to the address bus 8, the ROM 10 outputs 64-bit data that is a combination of 16-bit data stored at the address N, 16-bit data stored at the address (N + 1), 16-bit data stored at the address (N + 2), and 16-bit data stored at the address (N + 3) to the data bus 2.
(2) The decoder 4 includes four instruction registers. The input bus 3 connects with four branch paths each of which carries 16-bit data to one of the four instruction registers.
(3) The execution time T in the IF stage is equal to that in the first embodiment, but corresponds to four cycles of the system clocks. Specifically, the frequency of the system clocks is four times that in the conventional CPU so that the execution time in the stages other than the IF stage is a quarter (T/4) of the execution time T in the IF stage.
(4) The program counter unit 7-3 increments, similar to the first embodiment, an address held therein by one (1) at each rise of the system clocks and outputs the address to the address bus 8 each time the remainder of the address divided by four (4) becomes zero (0). The ROM 10 is responsive to the address transferred through the data bus 8 to supply four instructions expressed in 64 bits in total to the data bus 2. When data in the data bus 2 is, as shown in Fig. 4, considered to have been identified completely (i.e., at the fourth fall of the system clocks after the address is outputted to the address bus 8), the four instructions outputted from the ROM 10 are stored in the instruction registers, respectively.
(5) The switching unit 4-3 of the decoder 4 provides to the decoder unit 4-2 the instruction which was transferred from the ROM 10 to a string of 16 lower order bit positions of the data bus 2 and stored in the first of the four instruction registers when the remainder of an address in the program counter unit 7-3 divided by four (4) showed zero (0), the instruction which was transferred to the second string of 16 bit positions immediately adjacent the string of the 16 lower order bit positions of the data bus 2 and stored in the second of the instruction registers when the remainder of an address in the program counter unit 7-3 divided by four (4) showed one (1), the instruction which was transferred to the third string of 16 bit positions adjacent the second string of 16 bit positions and stored in the third of the instruction registers when the remainder of an address in the program counter unit 7-3 divided by four (4) showed two (2), and the instruction which was transferred to the fourth string of 16 bit positions adjacent the third string of 16 bit positions and stored in the fourth of the instruction registers when the remainder of an address in the program counter unit 7-3 divided by four (4) showed three (3).

Specifically, in an pipelined operation executed by the CPU 60 of the second embodiment, nth, (n+1)th, (n+2)th, and (n+3)th instructions are, as shown in Fig. 4, fetched simultaneously from the ROM 10 in the IF stage of the nth instruction processing cycle. The four instructions are decoded, in sequence, in the ID stages of the nth to (n+3) th instruction processing cycles. Following the IF stage in the nth instruction processing cycle, (n+4)th, (n+5)th, (n+6)th, and (n+7)th instructions are fetched simultaneously from the ROM 10 in the IF stage of the (n+4)th instruction processing cycle ranging from the ID stage in the nth instruction processing cycle to the ID stage in the (n+3)th instruction processing cycle. These operations are repeated in following instruction processing cycles.

Therefore, the CPU 60 of the second embodiment can perform the pipelined operation at a speed of two times that in the CPU 60 of the first embodiment.

The data processing system of the third embodiment will be described below.

The decoder 4 of the third embodiment includes, as shown in Fig. 6, an NOP instruction control signal register 4-4, a switching circuit 4-5, and a control signal selection control circuit 4-6. Other arrangements are identical with those of the decoder 4 in the first embodiment, and explanation thereof in detail will be omitted here.

The NOP instruction control signal register 4-4 stores therein a code, which will be referred to as an NOP instruction control signal below, derived by decoding an NOP (non-operation) instruction that is a dummy instruction not impinging upon operations in the EX, MA, and WB stages and outputs it to the switching circuit 4-5 at all times.

The switching circuit 4-5 selects either of a real instruction control signal decoded by the decoder unit 4-2 and the NOP instruction control signal outputted from the NOP instruction control signal register 4-4 according to a selection signal outputted from the control signal selection control circuit 4-6 and provides the selected one to the data path circuit 7 through a control bus 5.

When an instruction decoded in a previous ID stage by the decoder unit 4-2 and an instruction decoded in a current ID stage by the decoder unit 4-2 show a first preselected relation, the control signal selection control circuit 4-6 outputs a first selection signal to the switching circuit 4-5 to provide the instruction control signal decoded in the current ID stage to the data path circuit 7. Alternatively, when the two instructions decoded in the pervious and current ID stages show a second preselected relation different from the first relation, the control signal selection control circuit 4-6 outputs a second selection signal to the switching circuit 4-5 to provide the NOP instruction control signal to the data path circuit 7 instead of the instruction control signal decoded in the ID stage in the current instruction processing cycle.

For example, in a case where an instruction decoded by the decoder unit 4-2 in the ID stage in a previous instruction processing cycle is a loading instruction to read data out of the ROM 10 or the RAM 12, and an instruction decoded by the decoder unit 4-2 in the ID stage in a current instruction processing cycle is an instruction (hereinafter, referred to as a loaded data use instruction) to perform an operation on the data read out of the ROM 10 or RAM 12 according to the loading instruction decoded in the previous ID stage, the control signal selection control circuit 4-6 controls the switching circuit 4-5 to output the NOP instruction control signal to the data path circuit 7.

When the NOP instruction control signal is supplied to the data path circuit 7, it is executed in the EX, MA, and WB stages in the current instruction processing cycle instead of the loaded data use instruction decoded by the decoder unit 4-2.

For example, in the pipelined operation shown in Fig. 2, if an instruction decoded in the ID stage idn in the nth instruction processing cycle is the loading instruction, and an instruction decoded in the ID stage idn+1 in the (n+1)th instruction processing cycle is the loaded data use instruction, the NOP instruction is executed in the EX, MA, and WB stages in the (n+1)th instruction processing cycle. This is because if an operation is performed in the EX stage exn+1 of the (n+1)th instruction processing cycle according to the loaded data use instruction, an operation (i.e., a data read operation) in the MA stage according to the loading instruction decoded in the ID stage idn of the nth instruction processing cycle is not yet completed, so that the operation in the EX stage exn+1 is not carried out perfectly.

Specifically, the CPU 60 of this embodiment outputs the NOP instruction control signal to the data path circuit 7 in the ID stage idn+1 of the (n+1)th instruction processing cycle through activities of the NOP instruction control signal register 4-4, the switching circuit 4-5, and the control signal selection control circuit 4-6 and performs the NOP instruction in the EX, MA, and WB stages of the (n+1)th instruction processing cycle. This prevents the loaded data use instruction from being executed incorrectly. The loaded data use instruction may be executed in the EX stage in, for example, the (n+2)th instruction processing cycle after the data read operation is completed in the MA stage in the nth instruction processing cycle.

The requirement for outputting the NOP instruction control signal to the data path circuit 7 instead of the instruction control signal decoded by the decoder unit 4-2 is not limited to the one as discussed above. For example, if it is determined that a problem would arise when an instruction decoded in the ID stage is executed immediately in the same instruction processing cycle, the switching circuit 4-5 may be controlled to provide the NOP instruction control signal to the data path circuit 7.

The structure of the decoder 4 of this embodiment may be used with the data processing system of the second embodiment.

While the present invention has been disclosed in terms of the preferred embodiment in order to facilitate a better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

For example, the CPUs 60 of the first to third embodiments are designed to fetch two to the nth power instructions (n = a natural number) simultaneously from the ROM 10 in a single IF stage, but may alternatively fetch another number of instructions simultaneously. The simultaneous fetching of the two to the nth power instructions, however, has the advantage that the whole of the data lines 10d and 12d is used effectively because the basic bit length of an instruction and the bus width of the data lines 10d and 12d of the ROM 10 and the RAM 12 both are two to the nth power bits.

The ROM 10 may use a so-called big endian memory structure instead of the little endian memory structure.

## Claims

1. A data processing system effecting different stages of a pipelined operation in parallel to perform a plurality of instructions in successive instruction processing cycles concurrently and in an overlapped fashion, comprising:
a memory (10) that stores a plurality of instructions, each of the instructions being expressed in a string of bits having a bit length which is shorter than a bus width of a data bus (2) through which the instructions are transferred from said memory;
a fetching circuit that fetches a given plurality of the instructions simultaneously from said memory (10) through the data bus (2) in an instruction fetching stage;
a decoder (4) that decodes the given plurality of the instructions fetched simultaneously by said fetching circuit, in sequence, in instruction decoding stages in the one of the instruction processing cycles in which said fetching circuit fetches the given plurality of the instructions from said memory (10) and in at least a following one of the instruction processing cycles; and
an arithmetic circuit (7-1) that executes operations in execution stages in the one of the instruction processing cycles in which said fetching circuit fetches the given plurality of the instructions from said memory (10) and in at least the following one of the instruction processing cycles according to the instructions decoded by said decoder (4), wherein:
the instruction fetching stage has an execution time longer than an execution time of the instruction decoding stage and the execution stage occurring in the same instruction processing cycle as the instruction fetching stage, and
the instruction fetching stage occurs in every m^{th} instruction processing cycle, where m is equal to the given plurality of the instructions simultaneously fetched by said fetching circuit, for a period of time during which the instruction decoding stages of a number equal to the given plurality of the instructions simultaneously fetched by said fetching circuit occur in the instruction processing cycles in succession.

2. A data processing system as set forth in claim 1, wherein said decoder (4) includes a plurality of registers (4-la, 4-1b) for storing the instructions transferred from said memory (10) through the data bus (2), respectively, a decoding circuit (4-2), and a switching circuit (4-3) for selectively providing the instructions stored in said registers (4-la, 4-1b) to said decoding circuit (4-2) so that said decoding circuit (4-2) decodes one of the instructions in each of the instruction decoding stages of the successive instruction processing cycles.

3. A data processing system as set forth in claim 2, wherein said fetching circuit includes a program counter unit (7-3) which produces an address incremented in response to each clock input and said switching circuit (4-3) is responsive to the address produced by said program counter unit (7-3) to provide one of the instructions to said decoding circuit (4-2).

4. A data processing system as set forth in claim 2, wherein said decoder (4) includes a dummy instruction supplying circuit (4-4, 4-5, 4-6) which supplies to said arithmetic circuit (7-1) a dummy instruction instead of one of the instructions decoded in a current one of the instruction processing cycles when the one of the instructions decoded in the current one of the instruction processing cycles and one of the instructions decoded in a previous one of the instruction processing cycles bears a preselected relation.

5. A data processing system as set forth in claim 1, wherein the given plurality of the instructions simultaneously fetched from said memory (10) in the instruction fetching stage is two to the nth power, where n is a natural number.

6. A pipelining method for effecting different stages of a pipelined operation in parallel so as to perform a plurality of instructions in successive instruction processing cycles concurrently and in an overlapped fashion, comprising:
a fetching step for fetching a given plurality of the instructions simultaneously from a memory (109 through a data bus (2) in an instruction fetching stage, each of the instructions being expressed in a string of bits having a bit length which is shorter than a bus width of the data bus (2);
a decoding step for decoding the given plurality of the instructions fetched simultaneously by said fetching circuit, in sequence, in instruction decoding stages in the one of the instruction processing cycles in which said fetching step fetches the given plurality of the instructions from said memory (10) and in at least a following one of the instruction processing cycles; and
an arithmetic step for executing operations in execution stages in the one of the instruction processing cycles in which said fetching step fetches the given plurality of the instructions from said memory (10) and in at least the following one of the instruction processing cycles according to the instructions decoded by said decoding step, wherein
the instruction fetching stage has an execution time longer than an execution time of the instruction decoding stage and the execution stage occurring in the same instruction processing cycle as the instruction fetching stage, and
the instruction fetching stage occurs in every m^{th} instruction processing cycle, where m is equal to the given plurality of the instructions simultaneously fetched by said fetching circuit, for a period of time during which the instruction decoding stages of a number equal to the given plurality of the instructions simultaneously fetched by said fetching circuit occur in the instruction processing cycles in succession.

7. A pipelining method as set forth in claim 6, further comprising a dummy instruction providing step for providing a dummy instruction, wherein said arithmetic step executes the dummy instruction instead of performing the operation according to one of the instructions decoded in a current one of the instruction processing cycles when the one of the instructions decoded in the current one of the instruction processing cycles and one of the instructions decoded in a previous one of the instruction processing cycles bears a preselected relation.

8. A pipelining method as set forth in claim 6, wherein the given plurality of the instructions simultaneously fetched from said memory (10) in the instruction fetching stage is two to the nth power, where n is a natural number.

## Patentansprüche

1. Datenverarbeitungssystem, das unterschiedliche Schritte eines Pipeline-Vorgangs parallel bewirkt, um eine Mehrzahl von Anweisungen in aufeinanderfolgenden Anweisungsverarbeitungszyklen gleichzeitig und auf eine überlappende Weise durchzuführen, das aufweist:
einen Speicher (10), der eine Mehrzahl von Anweisungen speichert, wobei jede der Anweisungen als Folge von Bits ausgedrückt ist, die eine Bitlänge aufweist, welche kürzer als eine Busbreite eines Datenbuses (2) ist, durch welchen die Anweisungen von dem Speicher gesendet werden;
eine Abrufschaltung, die eine gegebene Mehrzahl der Anweisungen in einem Anweisungsabrufschritt gleichzeitig durch den Datenbus aus dem Speicher (10) abruft;
einen Dekodierer (4), der die gegebene Mehrzahl der Anweisungen , die von der Abrufschaltung gleichzeitig abgerufen werden, in Folge in Anweisungsdekodierschritten in dem einen der Anweisungsverarbeitungszyklen, in welchem die Abrufschaltung die gegebene Mehrzahl der Anweisungen aus dem Speicher (10) abruft, und in mindestens eines folgenden der Anweisungsverarbeitungszyklen dekodiert; und
eine Arithmetikschaltung (7-1), die Operationen in Ausführungsschritten in dem einen der Anweisungsverarbeitungszyklen, in welchem die Abrufschaltung die gegebene Mehrzahl der Anweisungen aus dem Speicher (10) abruft, und in mindestens dem folgenden der Anweisungsverarbeitungszyklen in Übereinstimmung mit den Anweisungen ausführt, die von dem Dekodierer (4) dekodiert werden, wobei:
der Anweisungsabrufschritt eine Ausführungszeit aufweist, die länger als eine Ausführungszeit des Anweisungsdekodierschritts ist, und der Ausführungsschritt in dem gleichen Anweisungsverarbeitungszyklus wie der Anweisungsabrufschritt auftritt, und
der Anweisungsabrufschritt in jedem m-ten Anweisungsverarbeitungszyklus für eine Zeitdauer auftritt, während welcher die Anweisungsdekodierungsschritte einer Anzahl, die gleich der gegebenen Mehrzahl der Anweisungen ist, die gleichzeitig von der Abrufschaltung abgerufen wird, in Folge in den Anweisungsverarbeitungszyklen auftritt, wobei m gleich der gegebenen Mehrzahl der Anweisungen ist, die für eine die gleichzeitig von der Abrufschaltung abgerufen wird.

2. Datenverarbeitungssystem nach Anspruch 1, wobei der Dekodierer (4) eine Mehrzahl von Registern (4-1 a, 4-1 b) zum Speichern der Anweisungen, die jeweils von dem Speicher (10) über den Datenbus gesendet werden, eine Dekodierschaltung (4-2) und ein Schaltnetz (4-3) zum derartigen selektiven Vorsehen der Anweisungen, die in den Registern (4-1 a, 4-1 b) gespeichert sind, an der Dekodierschaltung (4-2) beinhaltet, dass die Dekodierschaltung (4-2) eine der Anweisungen in jedem der Anweisungsdekodierschritte der aufeinanderfolgenden Anweisungsverarbeitungszyklen dekodiert.

3. Datenverarbeitungssystem nach Anspruch 2, wobei die Abrufschaltung eine Programmzählereinheit (7-3) beinhaltet, welche eine Adresse erzeugt, die als Reaktion auf jede Takteingabe inkrementiert wird, und das Schaltnetz (4-3) auf die Adresse reagiert, die von der Programmzählereinheit (7-3) erzeugt wird, um eine der Anweisungen an der Dekodierungsschaltung vorzusehen (4-2).

4. Datenverarbeitungssystem nach Anspruch 2, wobei der Dekodierer (4) eine Pseudoanweisungszufuhrschaltung (4-4, 4-5, 4-6) beinhaltet, welche der Arithmetikschaltung (7-1) eine Pseudoanweisung anstelle einer der Anweisungen, die einem derzeitigen der Anweisungsverarbeitungszyklen dekodiert wird, zuführt, wenn die eine der Anweisungen, die in dem derzeitigen der Anweisungsverarbeitungszyklen dekodiert wird, und eine der Anweisungen, die in einem vorhergehenden der Anweisungsverarbeitungszyklen dekodiert wird, eine im Voraus ausgewählte Relation trägt.

5. Datenverarbeitungssystem nach Anspruch 1, wobei die gegebene Mehrzahl der Anweisungen, die in dem Anweisungsabrufschritt gleichzeitig von dem Speicher (10) abgerufen werden, zwei hoch n ist , wobei n eine natürliche Zahl ist.

6. Pipeline-Verfahren zum parallelen Bewirken von unterschiedlichen Schritten eines Pipeline-Vorgangs, um eine Mehrzahl von Anweisungen in aufeinanderfolgenden Anweisungsverarbeitungszyklen gleichzeitig und auf eine überlappende Weise durchzuführen, das aufweist:
einen Abrufschritt zum gleichzeitigen Abrufen einer gegebenen Mehrzahl der Anweisungen durch einen Datenbus aus dem Speicher (10) in einem Anweisungsabrufschritt, wobei jede der Anweisungen als eine Folge von Bits ausgedrückt ist, die eine Bitlänge aufweisen, welche kürzer als eine Busbreite des Datenbuses (2) ist;
einen Dekodierschritt zum Dekodieren der gegebenen Mehrzahl der Anweisungen , die von der Abrufschaltung gleichzeitig abgerufen werden, in Folge in Anweisungsdekodierschritten in dem einen der Anweisungsverarbeitungszyklen, in welchem der Abrufschritt die gegebene Mehrzahl der Anweisungen aus dem Speicher (10) abruft, und in mindestens eines folgenden der Anweisungsverarbeitungszyklen; und
einen Arithmetikschritt zum Ausführen von Operationen in Ausführungsschritten in dem einen der Anweisungsverarbeitungszyklen, in welchem der Abrufschritt die gegebene Mehrzahl der Anweisungen aus dem Speicher (10) abruft, und in mindestens dem folgenden der Anweisungsverarbeitungszyklen in Übereinstimmung mit den Anweisungen ausführt, die von dem Dekodierschritt dekodiert werden, wobei:
der Anweisungsabrufschritt eine Ausführungszeit aufweist, die länger als eine Ausführungszeit des Anweisungsdekodierschritts ist, und der Ausführungsschritt in dem gleichen Anweisungsverarbeitungszyklus wie der Anweisungsabrufschritt auftritt, und
der Anweisungsabrufschritt in jedem m-ten Anweisungsverarbeitungszyklus für eine Zeitdauer auftritt, während welcher die Anweisungsdekodierungsschritte einer Anzahl, die gleich der gegebenen Mehrzahl der Anweisungen ist, die gleichzeitig von der Abrufschaltung abgerufen wird, in Folge in den Anweisungsverarbeitungszyklen auftritt, wobei m gleich der gegebenen Mehrzahl der Anweisungen ist, die für eine die gleichzeitig von der Abrufschaltung abgerufen wird.

7. Pipeline-Verfahren nach Anspruch 6, das weiterhin einen Pseudoanweisungszufuhrschritt zum Vorsehen einer Pseudoanweisung aufweist, wobei der Arithmetikschritt die Pseudoanweisung anstelle eines Durchführens der Operation in Übereinstimmung mit einer der Anweisungen, die in einem derzeitigen der Anweisungsverarbeitungszyklen dekodiert wird, ausführt, wenn die eine der Anweisungen, die in dem derzeitigen der Anweisungsverarbeitungszyklen dekodiert wird, und eine der Anweisungen, die in einem vorhergehenden der Anweisungsverarbeitungszyklen dekodiert wird, eine im Voraus ausgewählte Relation trägt.

8. Pipeline-Verfahren nach Anspruch 6, wobei die gegebene Mehrzahl der Anweisungen, die in dem Anweisungsabrufschritt gleichzeitig von dem Speicher (10) abgerufen werden, zwei hoch n ist , wobei n eine natürliche Zahl ist.

## Revendications

1. Système de traitement de données effectuant des étages différents d'une opération en pipeline en parallèle pour exécuter une pluralité d'instructions dans des cycles de traitement d'instructions successives simultanément et de manière en chevauchement comprenant :
une mémoire (10) qui mémorise une pluralité d'instructions, chacune des instructions étant exprimée dans une chaîne de bits ayant une longueur de bit qui est plus courte qu'une largeur de bus d'un bus de données (2) à travers lequel les instructions sont transférées depuis ladite mémoire ;
un circuit d'extraction qui extrait une pluralité donnée des instructions simultanément depuis ladite mémoire (10) à travers le bus de données (2) dans un étage d'extraction d'instruction ;
un décodeur (4) qui décode la pluralité donnée des instructions extraites simultanément par ledit circuit d'extraction, en séquence, dans des étages de décodage d'instruction dans l'un des cycles de traitement d'extraction dans lequel ledit circuit d'extraction extrait la pluralité donnée des instructions de ladite mémoire (10) et dans au moins un cycle suivant des cycles de traitement d'instruction ; et
un circuit arithmétique (7-1) qui exécute des opérations dans les étages d'exécution dans l'un des cycles de traitement d'instruction dans lequel ledit circuit d'extraction extrait la pluralité donnée des instructions de ladite mémoire (10) et dans au moins le cycle suivant des cycles de traitement d'instruction en conformité avec les instructions décodées par ledit décodeur (4), dans lequel :
l'étage d'extraction d'instruction a un temps d'exécution plus long qu'un temps d'exécution de l'étage de décodage d'instruction et l'étage d'exécution se produisant dans le même cycle de traitement d'instruction que l'étage d'extraction d'instruction, et
l'étage d'extraction d'instruction se produit à chaque mième cycle de traitement d'instruction, où m est égal à la pluralité donnée des instructions extraites simultanément par ledit circuit d'extraction, pendant une période de temps pendant laquelle les étages de décodage d'instruction d'un nombre égal à la pluralité donnée des instructions extraites simultanément par ledit circuit d'extraction se produisent dans les cycles de traitement d'instruction en succession.

2. Système de traitement de données selon la revendication 1, dans lequel ledit décodeur (4) inclut une pluralité de registres (4-la, 4-1b) pour mémoriser les instructions transférées de ladite mémoire (10) à travers le bus de données (2), respectivement, un circuit de décodage (4-2), et un circuit de commutation (4-3) pour fournir sélectivement les instructions mémorisées dans lesdits registres (4-la, 4-1b) audit circuit de décodage (4-2) de sorte que le circuit de décodage (4-2) décode une des instructions dans chacun des étages de décodage d'instruction des cycles de traitement d'instruction successifs.

3. Système de traitement de données selon la revendication 2, dans lequel ledit circuit d'extraction inclut une unité de compteur d'instruction (7-3) qui produit une adresse incrémentée en réponse à chaque entrée d'horloge et ledit circuit de commutation (4-3) est sensible à l'adresse produite par ladite unité de compteur d'instruction (7-3) pour délivrer une des instructions audit circuit de décodage (4-2).

4. Système de traitement de données selon la revendication 2, dans lequel ledit décodeur (4) inclut un circuit de fourniture d'instruction fictive (4-4, 4-5, 4-6) qui fournit audit circuit arithmétique (7-1) une instruction fictive à la place d'une des instructions décodées dans un cycle actuel des cycles de traitement d'instruction lorsque l'instruction parmi les instructions décodées dans le cycle actuel des cycles de traitement d'instruction et l'instruction parmi les instructions décodées dans un cycle précédent des cycles de traitement d'instruction porte une relation présélectionnée.

5. Système de traitement de données selon la revendication 1, dans lequel la pluralité donnée des instructions extraite simultanément de ladite mémoire (10) dans l'étage d'extraction d'instruction est de deux à la nième puissance, où n est nombre naturel.

6. Procédé de traitement en pipeline pour effectuer différents étages d'une opération en pipeline en parallèle de façon à exécuter une pluralité d'instructions dans des cycles de traitement d'instructions successives simultanément et de manière en chevauchement comprenant :
un étape d'extraction pour extraire une pluralité donnée des instructions simultanément depuis une mémoire (109) à travers un bus de données (2) dans un étage d'extraction d'instruction ; chacune des instructions étant exprimée en une chaîne de bits ayant une longueur de bit qui est plus courte qu'une largeur de bus du bus de données (2) ;
une étape de décodage pour décoder la pluralité donnée des instructions extraites simultanément par ledit circuit d'extraction, en séquence, dans des étages de décodage d'instruction dans l'un des cycles de traitement d'instruction dans lequel ladite étape d'extraction extrait la pluralité donnée des instructions de ladite mémoire (10) et dans au moins un cycle suivant des cycles de traitement d'instruction ; et
une étape arithmétique pour exécuter des opérations dans les étages d'exécution dans le cycle des cycles de traitement d'instruction dans lequel ladite étape d'extraction extrait la pluralité donnée des instructions de ladite mémoire (10) et dans au moins le cycle suivant des cycles de traitement d'instruction en conformité avec les instructions décodées par ladite étape de décodage, dans lequel :
l'étage d'extraction d'instruction a un temps d'exécution plus long qu'un temps d'exécution de l'étage de décodage d'instruction et l'étage d'exécution se produisant dans le même cycle de traitement d'instruction que l'étage d'extraction d'instruction, et
l'étage d'extraction d'instruction se produit à chaque mième cycle de traitement d'instruction, où m est égal à la pluralité donnée des instructions extraites simultanément par ledit circuit d'extraction, pendant une période de temps pendant laquelle les étages de décodage d'instruction d'un nombre égal à la pluralité donnée des instructions extraites simultanément par ledit circuit d'extraction se produisent dans les cycles de traitement d'instruction en succession.

7. Procédé de traitement en pipeline selon la revendication 9, comprenant, en outre, une étape de fourniture d'instruction fictive pour fournir une instruction fictive, dans lequel ladite étape arithmétique exécute l'instruction fictive à la place d'effectuer l'opération en conformité avec l'une des instructions décodées dans un cycle actuel des cycles de traitement d'instruction lorsqu'une instruction parmi les instructions décodées dans le cycle actuel des cycles de traitement d'instruction et l'instruction parmi les instructions décodées dans un cycle précédent des cycles de traitement d'instruction porte une relation présélectionnée.

8. Procédé de traitement en pipeline selon la revendication 6, dans lequel la pluralité donnée des instructions extrait simultanément de ladite mémoire (10) dans l'étage d'extraction d'instruction est de deux à la nième puissance, où n est un nombre naturel.
